# EUROPEAN PATENT APPLICATION

(11) **EP 4 575 722 A1**
(43) Date of publication of application: **25.06.2025**
(21) Application number: 23219272.4
(22) Date of filing: 21.12.2023
(51) Int. Cl.: G06F 3/01, A63F 13/285

(54) **HAPTIC DEVICE COMPRISING INDEPENDENT HAPTIC ACTUATORS**

(71) Applicant: Go Touch VR, 59000 Lille (FR)
(72) Inventor: VEZZOLI, Eric, 75016 PARIS (FR)
(74) Representative: RVDB

(57) **Abstract**

There is provided a haptic device (10) comprising a support (20) configured to support at least a part of a user's body (200) and a plurality of haptic units, further comprising a first haptic zone (10a) and a second haptic zone (10b) each configured to receive respectively a first user's body part (200a) and a second user's body part (200b). The first haptic zone comprises a first haptic unit (21) and a first part (20a) of the support and the second haptic zone comprises a second haptic unit (22) and a second part (20b) of the support, the second part being contiguous to the first part, the first haptic zone and the second haptic zone being arranged mechanically independent next to each other by a groove (23) made in the support.

## Description

### FIELD

The present application generally relates to the field of haptic and, in particular, to haptic device(s), also known as haptic feedback device(s), configured to render haptic effect(s) on one or more parts of a user's body.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature or pressure, to provide information to an end user, for example in addition to visual and audio information when rendering multimedia contents.

Haptic feedback covers a wide range of possible stimulation embodiments and includes tactile haptic technology. Tactile haptic feedback (or tactile haptic effect) refers to sensations such as vibration, friction, or micro-deformation, which may be obtained using a haptic device, which corresponds to, or comprises, an arrangement of one or more haptic actuators. For example, vibrotactile effects might be obtained with the use of haptic actuators such as ERMs (Eccentric Rotating Mass), LRAs (Linear Resonant Actuators), large bandwidth actuators like VCM (Voice Coil Motors), PZT (Piezoelectric Actuators), pneumatic actuators, SMA (Shape Memory Alloy) actuators or EAP (Electroactive Polymer) actuators.

Haptic feedback finds application in many domains and is for example commonly used in arcade games and in virtual reality systems to increase the feeling of immersion. A person willing to experience haptic feedback has to wear or use one or more haptic devices. In the case of several haptic actuators, generating several haptic feedback in close haptic zones, it is important to isolate their respective effects so as to avoid confusion for the user receiving these haptic feedback. In fact, combining several haptic actuators can generate uncomfortable and blurred haptic feedback. The user is then unable to identify a message emitted by a particular haptic actuator.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a haptic device comprising a support configured to support at least a part of a user's body and a plurality of haptic units,
the haptic device further comprising a first haptic zone and a second haptic zone each configured to receive respectively a first user's body part and a second user's body part,
the first haptic zone comprising a first haptic unit of the plurality and a first part of the support associated with the first haptic unit,
the second haptic zone comprising a second haptic unit of the plurality and a second part of the support associated with the second haptic unit, the second part being contiguous to the first part,
the first haptic zone and the second haptic zone being arranged mechanically independent next to each other by a groove made in the support.

In an exemplary embodiment, the first haptic zone is configured to transmit a first haptic effect rendered by the first haptic unit through a first front surface associated with the first haptic unit, the first front surface being configured to receive a first user's body part, and
the second haptic zone is configured to transmit a second haptic effect rendered by the second haptic unit through a second front surface associated with the second haptic unit, the second front surface being configured to receive a second user's body part.

In an exemplary embodiment, the first haptic unit is configured to generate a translational movement along a first principal plane corresponding to a median plane of the first front surface and wherein the second haptic unit is configured to generate a translational movement along a second principal plane corresponding to a median plane of the second front surface.

In a further exemplary embodiment, the first principal plane and the second principal plane are arranged inclined relative to each other at a determined angle lower than 25 degrees.

In another exemplary embodiment, the groove has a width greater than a sum of a first maximum amplitude of movement of the first actuator in the first plane and a second maximum amplitude of movement of the second actuator in the second plane.

In an additional exemplary embodiment, the groove has a depth determined from a first maximum amplitude of movement of the first actuator in the first plane, from a second maximum amplitude of movement of the second actuator in the second plane and from a stiffness of a material of the support.

In another exemplary embodiment, a profile of the groove in a plane normal to a longitudinal direction of the groove has a continuous curvature.

In an exemplary embodiment, the haptic device further comprises a covering layer configured to be in contact and adhere with the user's body, the covering layer covering the first and second haptic zones and the groove by following a groove surface.

In a further exemplary embodiment, the first haptic unit comprises a first haptic actuator and a first sheet element, the first haptic actuator being attached to a first face of the first sheet element and the second haptic unit comprises a second haptic actuator and a second sheet element, the second haptic actuator being attached to a second face of the second sheet element, wherein the first sheet element is linked to the first part on the first face and wherein the second sheet element is linked to the second part on the second face.

In an additional exemplary embodiment, the first haptic actuator is arranged in a first opened cavity formed into the first part, the first opened cavity having an opening oriented toward the outside of the haptic device, at least a part of the opening being closed with the first sheet element, and
wherein the second haptic actuator is arranged in a second opened cavity formed into the second part, the second opened cavity having an opening oriented toward the outside of the haptic device, at least a part of the opening being closed with the second sheet element.

In a further exemplary embodiment, the first and second user's body parts each refer to a back of a user.

In an exemplary embodiment, the first and second user's body parts each refer to a leg of a user.

In an additional exemplary embodiment, the first and second haptic units each comprise a vibrotactile actuator.

In an additional exemplary embodiment, the first haptic unit and second haptic unit are controlled independently.

In a further exemplary embodiment, the haptic device corresponds to a chair cover comprising a seat and a backrest, the seat and the backrest being attached to each other by a hinge.

In an exemplary embodiment, the seat comprises a first set of haptic zones comprising the first and second haptic zones, the groove surrounding each haptic zone of the first set.

In an additional exemplary embodiment, the backrest comprises a second set of haptic zones comprising the first and second haptic zones, the groove surrounding each haptic zone of the second set.

In another exemplary embodiment, the first set comprises two haptic zones and the second set comprises four haptic zones.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic perspective representation of a first haptic device, in accordance with at least one exemplary embodiment;
**Figure 2** shows a schematic perspective representation of a second haptic device, in accordance with at least one exemplary embodiment;
**Figure 3** shows a first exploded view of a pair of haptic zones comprised in the haptic device of figure 2, in accordance with at least one exemplary embodiment;
**Figure 4** shows a first schematic sectional representation of the pair of haptic zones of figure 3, in accordance with at least one exemplary embodiment;
**Figure 5** shows a second exploded view of a pair of haptic zones comprised in the haptic device of figure 2, in accordance with at least one exemplary embodiment;
**Figure 6** shows a second schematic sectional representation of the pair of haptic zones of figure 5, in accordance with at least one exemplary embodiment;
**Figure 7** shows a third schematic sectional representation of a pair of haptic zones of a part of the haptic device of figure 2, in accordance with at least one exemplary embodiment;
**Figure 8** shows a fourth schematic sectional representation of a pair of haptic zones of a part of the haptic device of figure 2, in accordance with at least one exemplary embodiment; and
**Figure 9** shows a fifth schematic sectional representation of a groove of a part of the haptic device of figure 2, in accordance with at least one exemplary embodiment.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to a haptic device comprising a support configured to support at least a part of a user's body and a plurality of haptic units, the haptic device further comprising a first haptic zone and a second haptic zone, each configured to receive respectively a first user's body part and a second user's body part.

The first haptic zone comprises a first haptic unit and a first part of the support and the second haptic zone comprises a second haptic unit and a second part of the support. The second part is contiguous to the first part. The first haptic zone and the second haptic zone are arranged mechanically independent next to each other by a groove made in the support.

The haptic device corresponds for example to a chair, a seat, a backrest, a chair cover, a seat cover, a backrest cover or a haptic vest.

Other examples of equipment or apparatus that may correspond to the haptic device include head mounted display devices (HMD, see-through glasses), wireless (e.g., Bluetooth^{®}) connected wearable haptic devices, mousepad, palm rest, wrist rest for the mouse, wrist rest for the keyboard, headphones padded foam, chair, desk, XR headset, headphones, bracelet, head and/or lumbar support device or chair, a haptic suit or any other device suitable for rendering haptic effect(s) onto one or more parts of the user's body being in contact with the haptic device.

A haptic unit comprises at least a haptic actuator corresponding to a device configured to generate or produce mechanical motion or force from a source of energy that can be electrical, pneumatic or hydraulic. A haptic actuator may comprise a rotary motor (e.g., for rotating mass actuators such as ERM) or a linear motor (e.g., for linear actuators such as LRA).

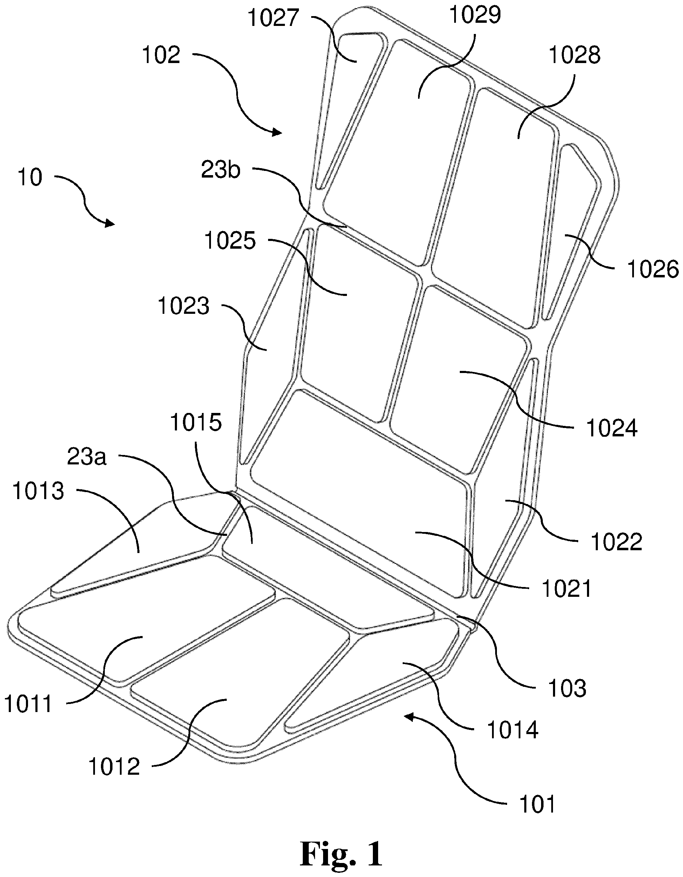

**Figure 1** illustrates a schematic partially perspective view of an exemplary embodiment of a haptic device.

The haptic device 10 according to the example of **Figure 1** corresponds to a chair cover or to a chair, e.g., a gaming seat, a theater seat, an operator seat, a vehicle seat, etc.

Naturally, the haptic device is not limited to a chair cover but extends to any haptic device comprising at least two haptic units, e.g., a haptic vest or suit, a chair, a seat cover or a backrest cover (i.e., a haptic gear configured to be arranged on at least a part of a chair (for example the back) not comprising any haptic unit for example).

The chair cover is represented in a perspective view and advantageously incorporates a plurality of zones or areas 1011, 1012, 1013, 1014, 1015, 1021, 1022, 1023, 1024, 1025, 1026, 1027, 1028, 1029, two or more of these zones corresponding to haptic zones, each haptic zone being configured to render one or more haptic effects to at least one body part of a user's body, each body part being stimulated by at least one haptic zone of the plurality of haptic zones comprised in the chair cover.

According to a specific example, one or more of the zones 1011, 1012, 1013, 1014, 1015, 1021, 1022, 1023, 1024, 1025, 1026, 1027, 1028, 1029 do not comprise any haptic unit or haptic actuator.

The haptic zones 1011, 1012, 1013, 1014, 1015, 1021, 1022, 1023, 1024, 1025, 1026, 1027, 1028, 1029 may be arranged in different parts or elements of the chair cover each supporting or resting one or more user's body parts, e.g., in the headrest, backrest 102, seat 101, armrest and/or leg rest.

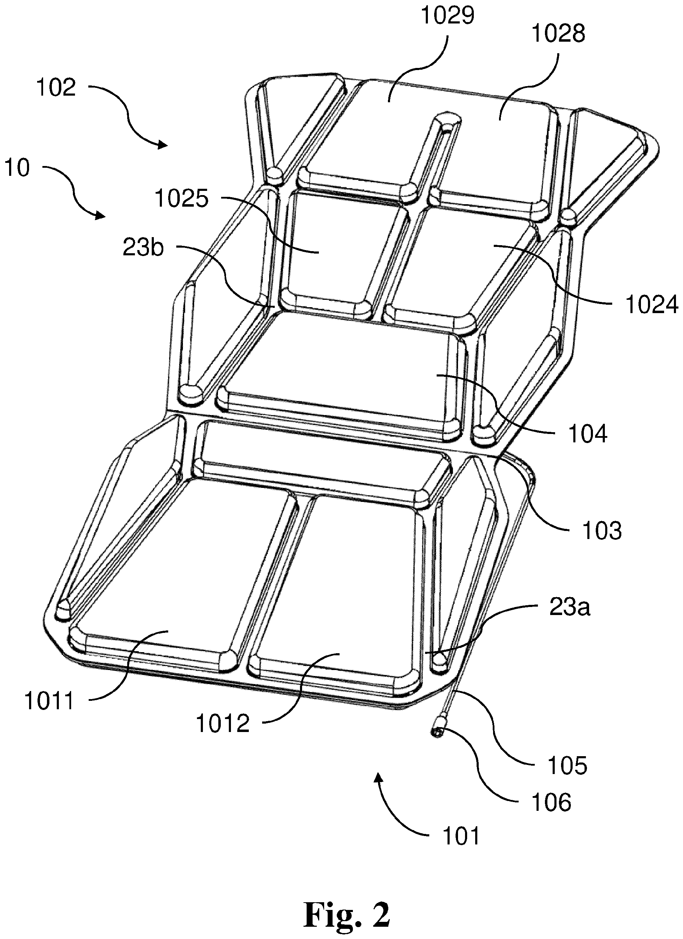

According to the exemplary embodiment illustrated in **Figure 1**, the haptic device 10 corresponds to a chair cover comprising a seat 101 and a backrest 102, the seat 101 and the backrest 102 being attached to each other by a hinge 103. Such a hinge 103 allow a user to easily store the haptic device 10 when not using it, and also allows the haptic device to be adapted or adjusted to the shape of a chair where the angle between the seat 101 and backrest 102 varies, for example from 90 to 180 degrees. An angle of 180 degrees, illustrated in **Figure 2**, allow the haptic device 10 to be used on a sofa or on a bed, with a user lying on the haptic device 10.

The seat 101 comprises a first set of haptic zones comprising at least a first and a second haptic zones with a first groove 23a surrounding each haptic zone 1011, 1012, 1013, 1014, 1015 of the first set. In this configuration, a first user's body part stimulated by a first haptic unit comprised in the first haptic zone 1011 and a second user's body part stimulated by a second haptic unit comprised in the second haptic zone 1012 refer, for example, to a leg of a user.

The backrest 102 comprises a second set of haptic zones comprising at least a first and a second haptic zones 1021, 1022, 1023, 1024, 1025, 1026, 1027, 1028, 1029 with a second groove 23b surrounding each haptic zone of the first set. In this configuration, a first user's body part stimulated by a first haptic unit comprised in the first haptic zone and a second user's body part stimulated by a second haptic unit comprised in the second haptic zone refer, for example, to a back of a user.

According to the exemplary embodiment illustrated in **Figure 1**, the first set of haptic zones comprises five haptic zones 1011, 1012, 1013, 1014, 1015, and the second set of haptic zones comprises nine haptic zones 1021, 1022, 1023, 1024, 1025, 1026, 1027, 1028, 1029. For example, each haptic zone 1011, 1012, 1013, 1014, 1015, 1021, 1022, 1023, 1024, 1025, 1026, 1027, 1028, 1029 comprises a haptic actuator such as a vibrotactile actuator, each haptic actuator being controlled independently, for example by a haptic engine.

The five haptic zones 1011, 1012, 1013, 1014, 1015 of the first set of haptic zones are, for example, configured to respectively receive the underside of a right thigh, the underside of a left thigh, the side of the right thigh, the side of the left thigh and a buttock.

The nine haptic zones 1021, 1022, 1023, 1024, 1025, 1026, 1027, 1028, 1029 of the second set of haptic zones are, for example, configured to respectively receive a lumbar vertebra, left ribs, right ribs, a left dorsal vertebra, a right dorsal vertebra, a left scapula, a right scapula, a left shoulder and a right shoulder.

According to another exemplary embodiment, the haptic device 10 does not comprise fourteen haptic zones but comprises at least two haptic zones, e.g. two, three, five, twenty, one hundred or more haptic zones.

Every haptic actuator comprised in a haptic zone 1011, 1012, 1013, 1014, 1015, 1021, 1022, 1023, 1024, 1025, 1026, 1027, 1028, 1029 is for example controlled and powered by a controller arranged in the haptic device 10, the haptic actuator being for example connected to a controller via wired connection (not shown). The controller is for example connected to a haptic engine, e.g., a computer, via a wired or a wireless connection. The controller receives, from the haptic engine, haptic signal(s) transporting haptic data (e.g., amplitude and frequency) representative of the haptic effect to be generated by the haptic actuator. The controller controls the haptic actuator according to the received haptic signal(s).

According to a first example, the haptic actuator is controlled to generate vibrations along an axis comprised in the plane locally following a front surface of the haptic zone comprising the haptic actuator. By front surface we intend the haptic zone surface oriented toward a user's body part. The vibrations are for example generated by the movement of an inertial mobile element of the haptic actuator in translation along this axis. Thanks to the inertia of the mobile element in movement inside the haptic actuator, the haptic actuator moves and drives the haptic zone in which it is comprised.

**Figure 2** illustrates a schematic perspective representation of a second haptic device, in accordance with at least one exemplary embodiment.

The haptic device 10 according to the example of **Figure 2** corresponds to a chair cover, illustrated in a flat or spread position.

The chair cover is represented in a perspective view and advantageously incorporates a plurality of zones or areas 1011, 1012, 1013, 1014, 1015, 1021, 1022, 1023, 1024, 1025, 1026, 1027, 1028, 1029, two or more of these zones, e.g., the zones 1011, 1012, 1024, 1025, 1028, 1029, corresponding to haptic zones, each haptic zone being configured to render one or more haptic effects to at least one body part of a user's body, each body part being stimulated by at least one haptic zone of the plurality of haptic zones comprised in the chair cover.

The haptic zones 1011, 1012, 1024, 1025, 1028, 1029 may be arranged in different parts or elements of the chair cover each supporting or resting one or more user's body parts, e.g., in the seat 101 and in the backrest 102.

According to the exemplary embodiment illustrated in **Figure 2****,** the haptic device 10 corresponds to a chair cover comprising a seat 101 and a backrest 102, the seat 101 and the backrest 102 being attached to each other by a hinge 103. As described with respect to the particular example shown in **Figure 1**, such a hinge 103 allows a user to store easily the haptic device 10 when not using it, and also allows the haptic device to be adapted or adjusted to the shape of a chair where the angle between the seat 101 and backrest 102 varies, for example from 90 to 180 degrees, 180 degrees corresponding to the exemplary embodiment illustrated in **Figure 2****.**

According to an exemplary embodiment, the chair cover comprises three pairs of haptic zones, each comprising a first and a second haptic zones with a groove 23a, 23b separating each haptic zone of a pair of haptic zones. A first pair of haptic zones comprises two haptic zones 1011, 1012 separated by a first groove 23a, a second pair of haptic zones comprises two haptic zones 1024, 1025 separated by a second groove 23b and a third pair of haptic zones comprising two haptic zones 1028, 1029 partially separated by the second groove 23b.

According to the exemplary embodiment illustrated in **Figure 1**, each haptic zone 1011, 1012, 1024, 1025, 1028, 1029 comprises a haptic actuator such as a vibrotactile actuator positioned within it. Each haptic actuator is linked to a haptic controller positioned inside the haptic device 10, for example inside a thickened part 104 of the backrest 102. This haptic controller is configured for distributing haptic effects to the various haptic actuators positioned inside the haptic zones 1011, 1012, 1024, 1025, 1028, 1029 according to controls received from a haptic engine (not shown). The haptic controller is, for example, a printed circuit board or motherboard, wired to the haptic actuators and connected to a haptic engine via a cable 105 and connector 106. The connector 106 is, for example, a universal jack or "Universal Serial Bus" (USB) connector. The cable length is comprised, for example, between 30 and 120cm, making it possible to connect the haptic device 10 to the haptic engine, to a computer or to a game console when the haptic device is installed in a chair.

Optionally, the haptic device 10 comprises a human-machine interface, such as buttons positioned on the surface of the backrest 102 and connected to the haptic controller. Such an interface makes it possible, for example, to activate or deactivate the haptic device effects and to set a haptic rendering level, i.e. to adjust, for example, the amplitude of the vibrations generated by the various haptic actuators.

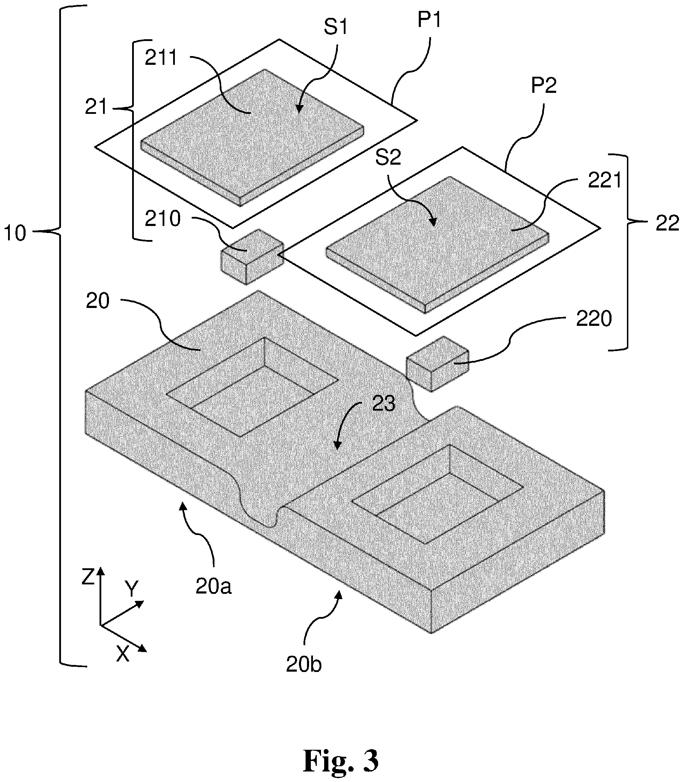

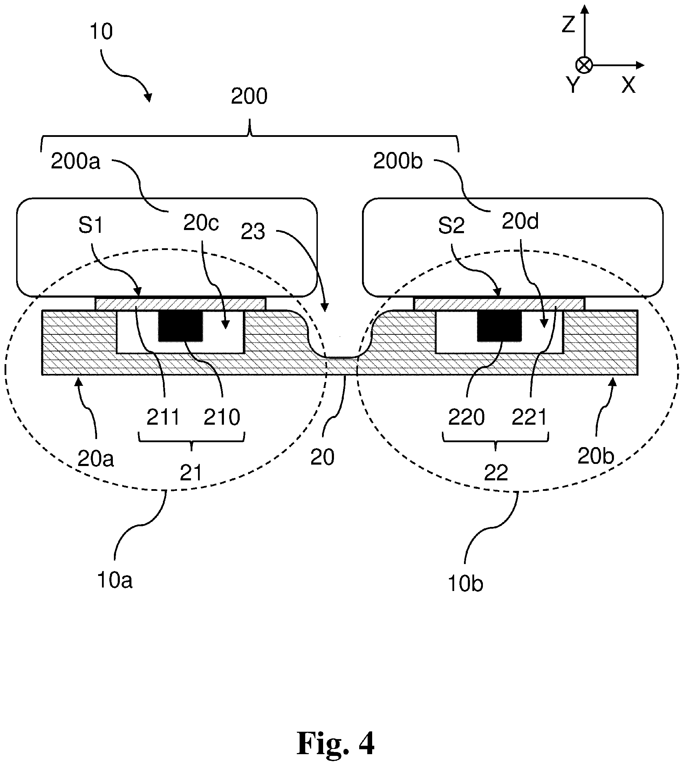

**Figure 3** illustrates a first exploded view of a pair of haptic zones comprised in a haptic device, for example the haptic device 10 of **Figure 2****,** in accordance with at least one exemplary embodiment. **Figure 4** illustrates a first schematic sectional representation of the pair of haptic zones of **Figure 3****.**

This pair of haptic zones comprises a first haptic zone 10a and a second haptic zone 10b, each configured to receive respectively a first user's body part 200a and a second user's body part 200b of a user's body 200.

The first and second user's body parts 200a, 200b may be a same body part or different body parts, for example according to the type of a body model or to the granularity level of the body model. The body model corresponds to a schematic representation of the user's body 200.

Depending on how the user's body 200 is represented or defined through a body model, the first 10a and second 10b haptic zones may target a same user's body part or 2 different, potentially complementary, user's body parts.

For example, the back of a user may be represented with one or several body parts, according to the body model.

The back may be represented with a single body part called "back". According to this example, the first 10a and second 10b haptic zones of the haptic device 10 refer to or target a single and same user's body part, i.e., the back.

According to another example, the back of a user may be represented with 2 different user's body parts, namely a "upper back" and a "lower back". According to this another example, the first 10a and second 10b haptic zones of the haptic device 10 refer to or target a single and same user's body part, i.e., the upper back or two different user's body parts, i.e., the upper back and the lower back.

According to a further example, the back of a user may be represented with nine different body parts, namely a "lumbar vertebra", a "right dorsal vertebra", a "right shoulder", "right ribs", a "left dorsal vertebra", "a left shoulder", "left ribs" a "right scapula" and a "left scapula". According to this further example, the first 10a and second 10b haptic zones of the haptic device 10 refer to or target 2 different body parts, i.e., respectively the "lumbar vertebra" and the "right dorsal vertebra".

The inclination angle between the first and second haptic zones is for example chosen in such a way that the directions of the effects generated by the first and second haptic zones 10a, 10b converge toward a determined area of the user's body 200 or in a such a way that they follow the curves of the user's body 200.

The first haptic zone 10a comprises a first haptic unit 21 and a first part 20a of a support 20, the first part 20a being associated with the first haptic unit 21. The second haptic zone 10b comprises a second haptic unit 22 and a second part 20b of the support 20, the second part 20b being associated with the second haptic unit 22. The second part 20b is contiguous to the first part 20a, the first haptic zone 10a and the second haptic zone 10b being arranged mechanically independent next to each other by a groove 23 made in the support 20. In other words, the first part 20a and the second part 20b belong to the support 20 and are separated by a groove 23.

According to a specific example associated with the haptic device 10 illustrated in **Figure 2**, the first haptic zone 10a and the second haptic zone 10b correspond to two haptic zones of the first set of haptic zones arranged side by side, the groove 23 corresponding to the first groove 23a or, according to another example, to two haptic zones of the second set of haptic zones arranged side by side, the groove 23 corresponding to the second groove 23b.

The haptic device 10 comprises a support 20 configured to support at least a part of a user's body and a plurality of haptic units 21, 22. Each part or element of the haptic device 10 supporting at least a part of user's body, i.e., the headrest, the backrest 102, the seat 101 and the armrests may comprise support 20, which is for example coated with a coating material adapted to be in contact with body part(s) of a user, such as textile, natural leather or synthetic leather. Please note that a user's body is taken to mean both a naked part and a clothed part of a user's body.

Within the meaning of these principles, the material of the support 20, called "material support", included in the haptic device 10 corresponds to any high elastically deformable material suitable for supporting the user's body or a part of user's body. Such a material support may deform when on contact with the user's body 200 and return to its previous or original shape when it is not in contact with the user's body.

The support material (e.g., polyurethane, latex), structure and/or support material properties (e.g., density, resilience) may for example vary from a haptic device to another one, or from a part to another part of a same haptic device. For example, the support material used in a chair cover backrest 102 may be different from the support material used in a chair cover seat 101 because the pressure exerted by the part of the user's body on the contact surface area is different (as the force and surface area are different).

The support material corresponds for example to a foam like expanded polyurethane, silicon, shape memory foam, gel, polyurethane foam, PVC (Polyvinyl Chloride) foam, polyethylene foam, polystyrene foam, rubber foam (e.g., caoutchouc), nitrile butadiene rubber (NBR), ethylene propylene diene monomer (EPDM), or TPE (Thermoplastic Elastomer) foam. The support 20 is manufactured, for example, by injection or compression molding, a liquid or malleable material being placed between the dies of such a mold, or by machining a block of material, for example a parallelepiped block of foam from which material is removed to form the cavities and groove(s).

According to the exemplary embodiment illustrated in **Figure 3** and in **Figure 4**, each haptic unit 21, 22 comprises one haptic actuator 210, 220 and one sheet element 211, 221, the first haptic unit 21 comprising a first haptic actuator 210 and a first sheet element 211 and the second haptic unit 22 comprising a second haptic actuator 220 and a second sheet element 221, each sheet element 211, 221 being configured to be in contact with a body part 200a, 200b to be stimulated by respectively the first haptic unit 21 and the second haptic unit 22.

The sheet element 211, 221 corresponds to an arrangement of one or more layers or sheets that is configured to transmit the movements or vibrations generated by a haptic actuator 210, 220 to the body part 200a, 200b. The first haptic actuator 210 is for example attached to a first face of the first sheet element 211, which is opposite to a face oriented toward a first user's body part 200a corresponding to a first front surface S1 of the first haptic unit 21 and the second haptic actuator 220 is for example attached to a second face of the second sheet element 221, which is opposite to a face oriented toward a second user's body part 200b corresponding to a second front surface S2 of the second haptic unit 22. The first haptic zone 10a is configured to transmit a first haptic effect rendered by the first haptic unit 21 through the first front surface S1, which is configured to receive a first user's body part 200a. The second haptic zone 10b is configured to transmit a second haptic effect rendered by the second haptic unit 22 through the second front surface S2, which is configured to receive a second user's body part 200b. The first front surface S1 and the second front surface S2 are in a determined material configured to adhere to the user's body part 200a, 200b (e.g., the skin of the user or clothes worn by the user). The sheet element 211, 221 corresponds for example to a plate acting as an interface between the haptic actuator 210, 220 resting against a face or surface of the sheet element 211, 221 and the user's body part 200a, 200b resting against the opposite face or surface of the sheet element 211, 221.

The sheet element 211, 221 may be of any shape, for example corresponding to a rectangle, a square, a circle, an oval, a trapezoid or polygon, the corners of which being sharp or rounded.

The first sheet element 211 is connected to the upper part of the first part 20a corresponding to the location closest to the first user's body part 200a, for example by sticking or bonding the first face of the first sheet element 211 to the front surface of the first part 20a. In a similar way, the second sheet element 221 is connected to the upper part of the second part 20b corresponding to the location closest to the second user's body part 200b, for example by sticking or bonding the second face of the second sheet element 221 to the front surface of the second part 20b.

In a first example, each sheet element 211, 221 comprises a single material, such as plastic or metal.

In a second example, each sheet element 211, 221 is obtained from several layers of material, for example by co-laminating sheets of different materials or by bonding them to each other. For example, a structural material forms a lower part of a sheet element 211, 221, while a soft material forms the upper part of the sheet element 211, 221 which is designed to be in contact with a user's body part 200a, 200b. The material of the upper part of the sheet element 211, 221 corresponds for example to one of the following materials: silicon, tissue, leather, plastic (e.g., PVC (Polyvinyl Chloride), PU (polyurethane) or PET (Polyethylene terephthalate)). Such a stack makes it possible to take advantage both of the mechanical properties like rigidity of the structural material and of the surface properties like higher friction of the soft material to maximize mechanical coupling with the skin.

The role of haptic actuators 210, 220 is to make a part of the user's body vibrate, using devices such as ERMs (Eccentric Rotating Mass), LRAs (Linear Resonant Actuators), large bandwidth actuators like VCM (Voice Coil Motors), PZT (Piezoelectric Actuators), pneumatic actuators, SMA (Shape Memory Alloy) actuators or EAP (Electroactive Polymer) actuators. So, the first and second haptic actuators 21, 22 each corresponds to a vibrotactile actuator.

In this exemplary embodiment, the haptics actuators 210, 220 are configured to vibrate, so as to generate a translational movement, along one or two directions comprised in dedicated planes. The first haptic actuator 210 is configured to generate a translational movement along a first principal plane P1 corresponding to a median plane of the first front surface S1 and the second haptic actuator 22 is configured to generate a translational movement along a second principal plane P2 corresponding to a median plane of the second front surface S2. The first principal plane P1 and the second principal plane P2 are, in this example, corresponding to each other, but in another example these planes P1, P2 can be arranged parallel or arranged inclined relative to each other at a determined angle, for example at a determined angle of 5, 10 or 20 degrees, i.e., lower than 25 degrees, such an example might be related to use in a chair cover seat, which would have inclined haptic zones such as a first haptic zone configured to receive the underside of a thigh and a second haptic zone configured to receive the side of that same thigh.

An orthonormal referential system X, Y, Z is associated with the haptic device 10, the X and Y axes defining the orientation of the first P1 and second P2 principal planes (here merged), a profile of the groove 23 being comprised in the XZ plane, the groove propagating locally in the Y direction. The first haptic actuator 210 and the second haptic actuator 220 are then configured to generate a translational movement along, at least, the X axis. As the first sheet element 211 and the second sheet element 221 are thin and large, both first sheet element 211 and second sheet element 221 are flexible in the direction of the Z axis but are almost rigid along the X and Y axis. The first haptic actuator 210 and the second haptic actuator 220 movements make the first part 20a and second part 20b shake respectively, the upper parts of first 20a and second 20b parts moving along X axis to follow first 210 and second 220 haptic actuators movements. The propagation of these movements of the first 20a and second 20b parts of the support 20 is then stopped by the groove 23. The absence of material in line with the groove 23 allows the upper parts of the first 20a and second 20b parts to move freely along the X axis without transmitting this movement from the first part 20a to the second part 20b and conversely. It should be noted that the lower parts, i.e., the part opposite the user's body, of the first 20a and second 20b parts are fixed because they also adhere to a structural frame or support, for example a chair in the case where the haptic device 10 is a chair cover. Therefore, the part of the support 20 forming the base of the groove 23 is immobile, transmitting no movement between the first 20a and second 20b parts.

To prevent the support 20 from muffling the movement of the haptic actuators 210, 220, a gap is created between each haptic actuator 210, 220 and the support 20. In this way, the first haptic actuator 210 is arranged in a first opened cavity 20c formed into the first part 20a, the first opened cavity 20c having an opening oriented toward the outside of the haptic device 10, so toward first user's body part 200a, at least a part of this opening being closed with the first sheet element 211. In a similar way, the second haptic actuator 220 is arranged in a second opened cavity 20d formed into the second part 20b, the second opened cavity 20d having an opening oriented toward the outside of the haptic device 10, so toward second user's body part 200b, at least a part of this opening being closed with the second sheet element 221.

The distance between the first and the second haptic actuators 210, 220 and respectively the first cavity inner surface and the second cavity inner surface is for example comprised between 2 and 40 mm, depending for example on the size of the haptic actuator 210, 220. For example, the greater the size of the haptic actuator 210, 220, the greater the size of the cavity 20c, 20d and the greater the distance between the outer surface of the haptic actuator 210, 220 and the inner surface of the cavity 20c, 20d.

The size of the haptic actuator 210, 220 is for example comprised between 2x2x2 mm and 45x40x20 mm, depending for example on the sensitivity of the body part the haptic zone 10a, 10b comprising the haptic actuator 210, 220 is associated with. For example, the sensitivity of the legs or the back of a user is lower than the sensitivity of the user's hands. The sensation of a haptic effect on the legs or on the back requires a haptic actuator with greater size than the size of a haptic actuator for the sensation of a haptic effect on the hands. For example, a higher acceleration or a larger amplitude of the displacement of the haptic actuator 210, 220 movement is needed when generating a haptic effect on the legs or the back compared to the acceleration or amplitude of the displacement for a haptic effect to be sensed by the hands.

Size and/or shape of the cavity 20c, 20d depend for example on the size/shape of the haptic actuator 210, 220 installed inside this cavity 20c, 20d, on the location of the haptic unit 21, 22 in the haptic device 10 and/or on the type of the haptic device 10.

The size of the first sheet element 211 and the second sheet element 221 depends on the size of the opening of the first cavity 20c and second cavity 20d respectively. For example, when the first sheet element 211 has a rectangular shape (respectively circular shape), the height (respectively the diameter) of the first sheet element 211 (along the X axis) is for example comprised between 10 and 40 mm. The thickness of the first sheet element 211 depends for example on the material of the first sheet element 211 and is for example comprised between 0.5 to 2 mm.

Haptic effects are thus generated and applied to the first 200a and second 200b user's body parts, for example by generating tangential movements at the contact surface S1, S2 between a haptic zone 10a, 10b and a user's body part 200a, 200b. Each cavity 20c, 20d thus enables a maximum haptic effect to be generated by avoiding any loss of kinetic energy, and the groove 23 enables the haptic effects generated by the first haptic actuator 210 associated with to the first haptic zone 10a and the second haptic actuator 220 associated with the second haptic zone 10b to be clearly separated. Independent haptic effects are thus generated on the different user's body parts 200a, 200b by independently controlling the first and second haptic actuators 210, 220.

According to a variant, each haptic unit 21, 22 may further comprise a housing embedding the haptic actuator 210, 220 and the sheet element 211, 221, the housing being opened at a face, the opening being closed with the sheet element 211, 221. The haptic actuator 210, 220 may be arranged in the housing in such a way to be at a distance of each wall of the housing (i.e., with no contact with the walls), the haptic actuator 210, 220 being fixed to the inner surface of the sheet element 211, 221 (the inner surface being opposite to the outer surface in contact with the body part), the sheet element 211, 221 being linked to the housing in such a way as to be able to move with regard to the housing.

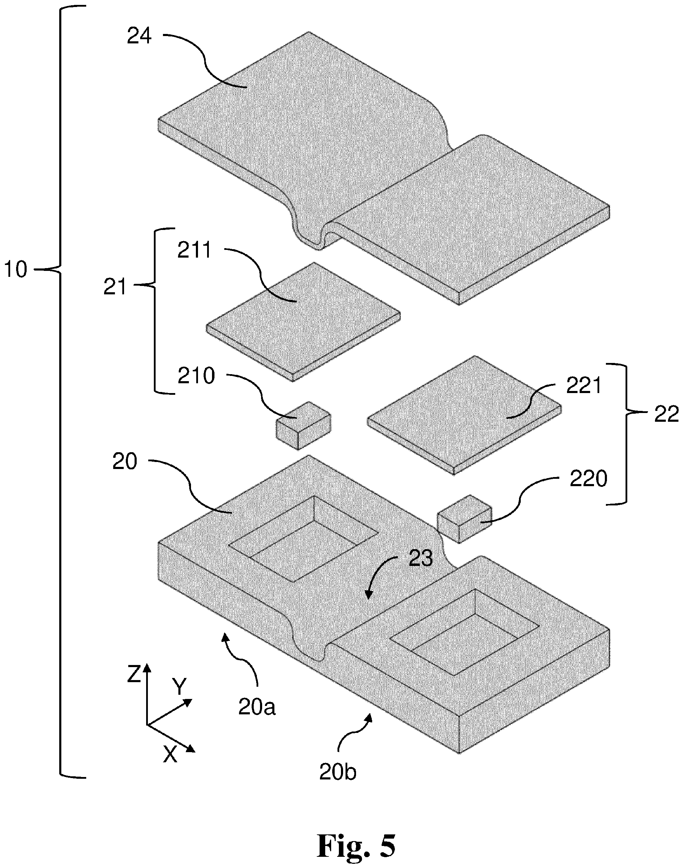

**Figure 5** illustrates a second exploded view of a pair of haptic actuators comprised in the haptic device of **Figure 2****,** in accordance with at least one exemplary embodiment.

The haptic device 10 shown in **Figure 5** is broadly similar to the haptic device shown in **Figure 3** and **Figure 4****.** However, it features an additional element as it further comprises a covering layer 24 configured to be in contact and adhere with the user's body 200, the covering layer 24 covering the first and second haptic zones 10a, 10b and the groove 23 by following a groove surface.

The coating layer 24 can, for example, cover the entire haptic device 10 or at least the visible parts of the haptic device 10. In another variant, the covering layer 24 covers the functional parts of the haptic device 10, i.e. all the haptic zones 10a, 10b and the groove 23.

The covering layer 24 can, for example, cover the entire haptic device 10 or at least the visible parts of the haptic device 10. In another variant, the covering layer 24 covers the functional parts of the haptic device 10, i.e. all the haptic zones 10a, 10b and the groove 23. The protective layer then improves the appearance of the haptic device 10 and/or the comfort of the haptic device 10. In fact, such a covering layer 24 is, for example, a simple fabric, thus making it possible to homogenize the overall appearance of the haptic device 10, or is a thick membrane that conforms to the shapes of the user's body parts 200a, 200b, for example a shape-memory membrane. A thick membrane provides a softer, more comfortable, warmer surface for the user's body 200 in contact with the haptic device 10, and prevents a sheet element 211, 221 from protruding and injuring the user.

According to a first particular embodiment, this covering layer 24 encapsulates at least part of the haptic device 10 and is not bonded to the elements of the haptic device 10. The absence of movement between the covering layer 24 and a sheet element 211, 221 is achieved by an adhesion between the material making up the covering layer 24 and the material of the upper surface of a sheet element 211, 221 it covers guaranteed by a pressure exerted by the user's body part 200a, 200b on the upper surface of the sheet element 211, 221 through the covering layer 24.

In a second particular embodiment, the covering layer 24 encapsulates at least part of the haptic device 10 and is bonded at least to the sheet elements 211, 221 and to the support 20 in the regions where a groove 23 is located, thus perfectly matching the haptic zones 10a, 10b and the groove 23. As this covering layer 24 is flexible, it locally follows the movements of the sheet elements 211, 221 and then transmits the vibrations from the haptic unit 21, 22 to the parts of the user's body 200a, 200b in contact with the haptic zones 10a, 10b respectively, the insulating effect of the groove 23 being preserved as the groove 23 is kept through the covering layer 24.

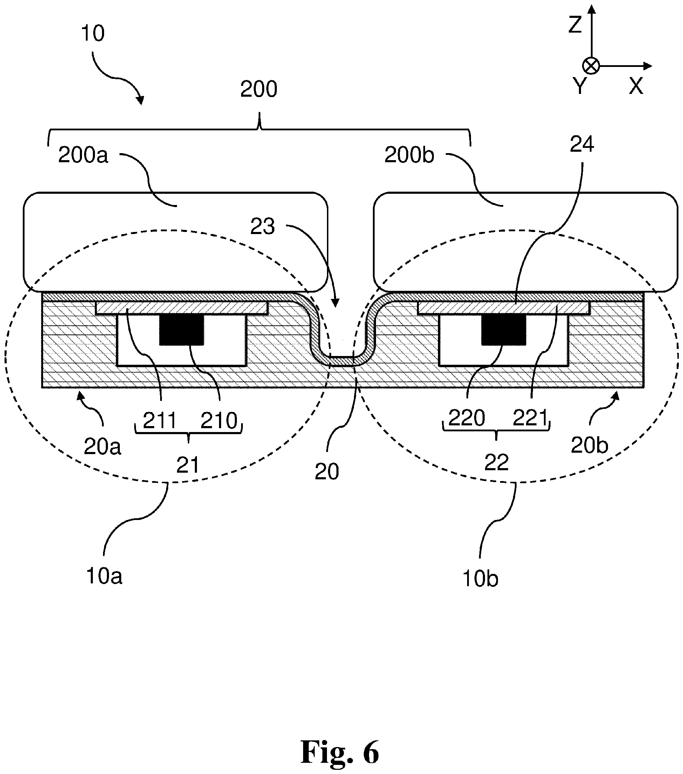

**Figure 6** illustrates a second schematic sectional representation of the pair of haptic actuators of figure 4 in accordance with at least one exemplary embodiment.

Unlike any example illustrated in **Figure 4**, the sheet elements 211, 221 are not placed on the support 20 but are embedded in the support 20, with an additional cavity in each first part 20a and second part 20b.

This embedded construction ensures a flat surface of each haptic zone 10a, 10b and avoids any protrusion of a sheet element 211, 221. A covering layer 24 made of a single-thickness material is also locally perfectly flat when applied to the haptic zones 10a, 10b.

In addition, any slippage of a first 211 and second 221 sheet element on the first part 20a and the second part 20b respectively is limited, thus improving the service life of an assembly comprising a sheet element 211, 221 and a first 20a or second 20b part and, optionally, the covering layer 24.

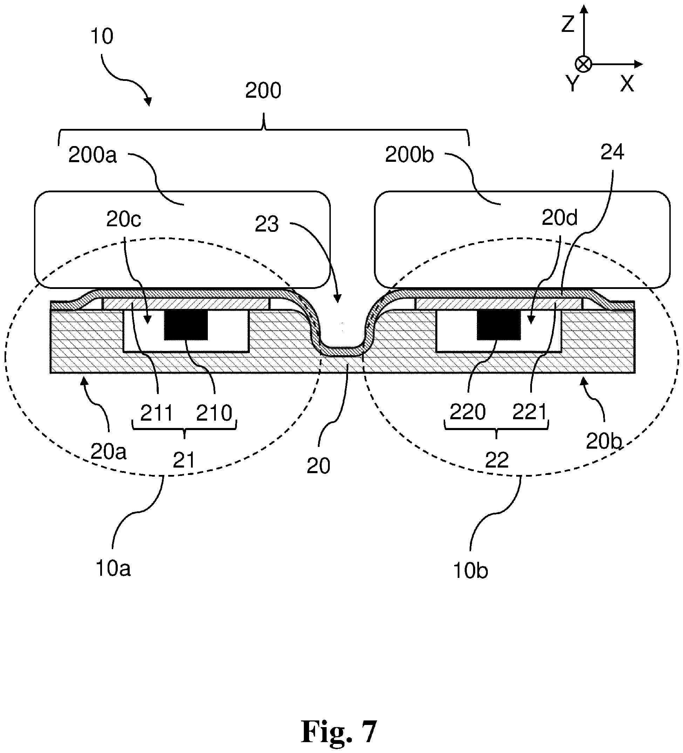

**Figure 7** illustrates a third schematic sectional representation of a pair of haptic actuators of a part of the haptic device of figure 1, in accordance with at least one exemplary embodiment.

A particular embodiment illustrated in **Figure 7** corresponds to a combination of a particular embodiment associated with **Figure 3** and the addition of a covering layer 24 over at least the haptic zones 10a, 10b and groove 23.

The covering layer 24, for example, is bonded to the support 20 at the groove 23 and, for example, on peripheral areas of the support 20. The covering layer 24 is, for example, also bonded to the first 211 and second 221 sheet elements but is not locally bonded to the first 20a and second 20b parts in the immediate vicinity of the first 211 and second 221 sheet elements. Thus, if a sheet element 211, 221 is movable relative to the first 20a and second 20b parts, it remains free to move translationally along X and Y axes oriented parallel to a principal plane of each sheet element 211, 221.

According to the non-limiting example of **Figure 7**, a peripheral area of the inner surface of the first sheet element 211 rests against an outer peripheral area of the first part 20a, the outer peripheral area surrounding the opening of the cavity 20c. The inner surface of the first sheet element 211 is advantageously adapted or configured to slide on the first part 20a when the first haptic actuator 210 attached to the inner surface of the first sheet element 211 is actuated and moves the first sheet element 211.

The arrangement comprising the first haptic actuator 210, the first sheet element 211 and the first part 20a is configured to enable a movement or vibration of the first sheet element 211 (generated by the first haptic actuator 210) while avoiding or minimizing the transfer of energy from the first sheet element 211 to the first part 20a. In addition, with the groove effect, the arrangement enables to optimize or maximize the transfer of the vibration from the first haptic actuator 210 to the first user's body part 200a via the first sheet element 211 and the covering layer 24.

However, movement of the first sheet element 211 is limited in particular by the elasticity of the covering layer 24 adhering to the first sheet element 211 front surface, which tends to return the first sheet element 211 to its original position thanks to the covering layer 24 elasticity.

The same behavior applies to the second sheet element 221, movable relative to the second part 20b. The inner surface of the second sheet element 221 is advantageously adapted or configured to slide on the second part 20b when the second haptic actuator 220 attached to the inner surface of the second sheet element 221 is actuated and moves the second sheet element 221.

The arrangement comprising the second haptic actuator 220, the second sheet element 221 and the second part 20b is configured to enable a movement or vibration of the second sheet element 221 (generated by the second haptic actuator 220) while avoiding or minimizing the transfer of energy from the second sheet element 221 to the second part 20b. In addition, with the groove effect, the arrangement enables to optimize or maximize the transfer of the vibration from the second haptic actuator 220 to the second user's body part 200b via the second sheet element 221 and the covering layer 24.

However, movement of the second sheet element 221 is limited in particular by the elasticity of the covering layer 24 adhering to the second sheet element 221 front surface, which tends to return the second sheet element 221 to its original position thanks to the covering layer 24 elasticity.

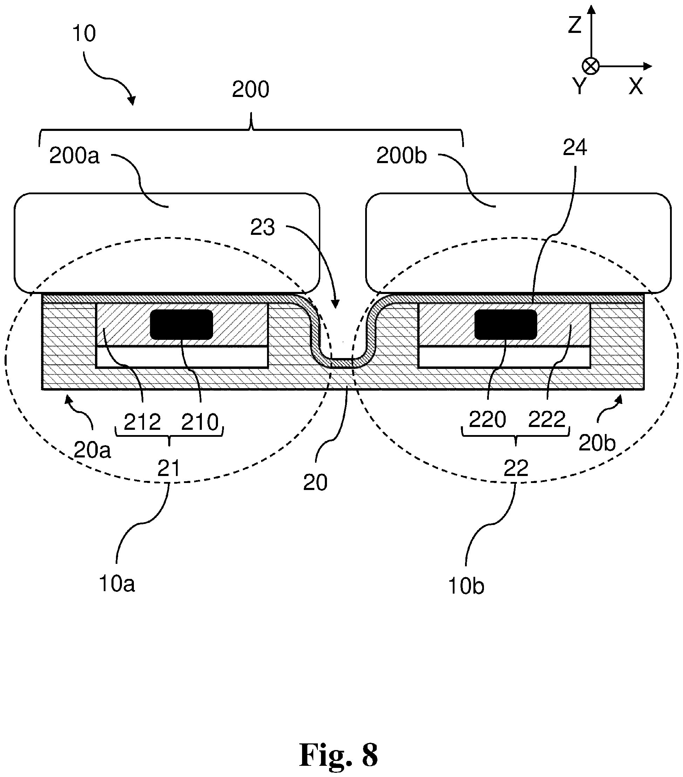

**Figure 8** illustrates a fourth schematic sectional representation of a pair of haptic actuators of a part of the haptic device of **Figure 2**, in accordance with at least one exemplary embodiment.

In this particular embodiment illustrated in **Figure 8**, the construction of a haptic unit 21, 22 differs from those illustrated previously. The first haptic unit 21 comprises a first haptic actuator 210 which is installed in a first haptic diffuser 212. Such a first haptic diffuser 212 makes it possible to obtain contact surfaces with a first user's body part 200a different from a generally flat surface previously obtained using a sheet element. Indeed, the first haptic diffuser 212 can assume any three-dimensional shape comprising at least the volume in which the first haptic actuator 210 is present. Similarly, the second haptic unit 22 comprises a second haptic actuator 220 which is installed in a second haptic diffuser 222. The shapes of the first 212 and second 222 haptic diffusers are not necessarily the same, as they are adapted to the first user's body part 200a and to the second user's body part 200b respectively, with which they interact.

In one embodiment, the haptic unit 10a, 10b is obtained from a haptic actuator 210, 220 overmolded in a haptic diffuser 212, 222. Such a configuration makes it possible, for example, to obtain a waterproof or even submersible haptic device 10. In this way, the haptic device 10 can be used in a damp environment, for example, or if it is used as a chair cover, it can be washed in water.

Optionally, a covering layer 24 can be applied on the haptic zones 10a, 10b and groove 23, so that the haptic device can benefit from the advantages developed above.

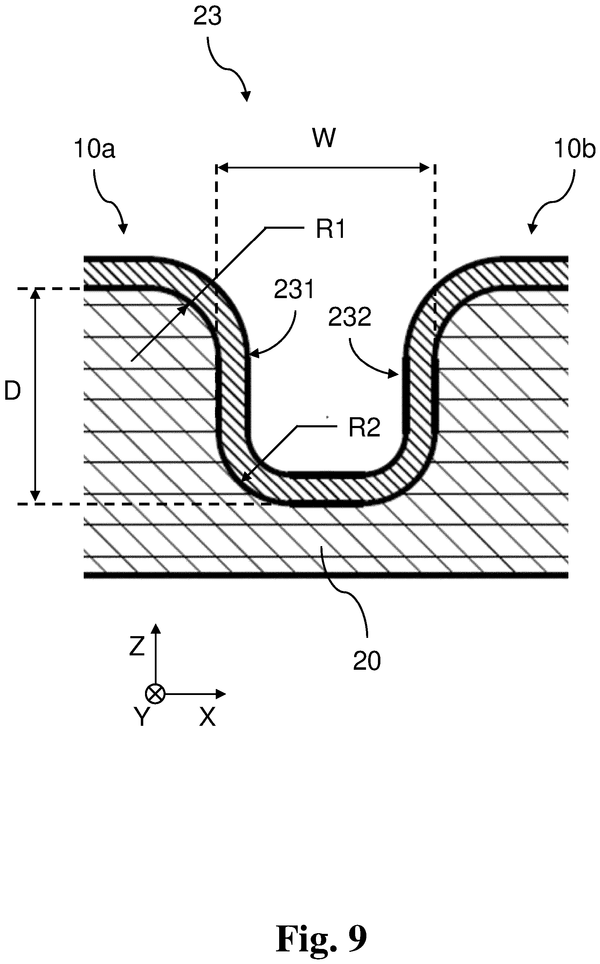

**Figure 9** illustrates a fifth schematic sectional representation of a groove of a part of the haptic device of **Figure 2**, in accordance with at least one exemplary embodiment.

The main function of groove 23 is to make the first 20a and second 20b parts it separates mechanically independent, so haptic effect rendered by each haptic zone 10a, 10b is independent.

To achieve this function, the groove 23 must be wide enough to prevent any collision between part of the first haptic zone 10a and part of the second haptic zone 10b. This means that the distance between the two opposite edges 231, 232 of the groove 23 must be sufficiently wide. For example, the groove 23 has a width W greater than a sum of a first maximum amplitude of movement of the first actuator 21 in the first plane P1 and a second maximum amplitude of movement of the second actuator 22 in the second plane P2, for example the sum of the maximum amplitude of movement of the first actuator 210 along X axis and the maximum amplitude of movement of the second actuator 220 along X axis. For example, the groove 23 width W is comprised between 2mm and 3cm.

The greater the depth D of groove 23, the more mobile and dissociated the first 10a and second 10b haptic zones. A deep groove 23 is therefore preferable. Nevertheless, sufficient support 20 must remain between the first haptic zone 10a and the second haptic zone 10b for the haptic device 10 to hold together in a sufficiently solid unit. Thus, the support 20 at the groove level must be thick enough to guarantee the cohesion of the entire haptic device 10, i.e. it must not, for example, tear away when the haptic device 10 is handled by a user, or when the user uses the haptic device, notably due to the relative movements of the first 10a and second 10b haptic zones generated during a phase of use. For example, the groove 23 has a depth D determined from a first maximum amplitude of movement of the first actuator 210 in said fist plane P1, from a second maximum amplitude of movement of the second actuator 220 in said second plane P2 and from a stiffness of a material of the support 20. For example, the groove 23 depth D is comprised between 2mm and 2cm.

If groove 23 is bare, i.e. not covered by a covering layer, then the groove may have a rectangular or trapezoidal profile.

Optionally, a covering layer 24 coats the haptic zones and the groove. To ensure that it follows the contours of the groove 23 perfectly, the groove 23 has a continuously curved profile, for example. In other words, the profile of the groove 23 in a plane normal to a longitudinal direction of the groove, here the XZ plane normal to Y axis, has a continuous curvature. For example, every angular shape is rounded. Such roundings allow the covering layer 24 to follow the external surfaces of groove 23.

In the example shown in **Figure 9**, groove 23 is symmetrical and follows a rectangular profile. The profile of groove 23 describes a first curve at the entrance to groove 23, with a first radius R1. The bottom of the groove 23 is also rounded, with the groove profile describing a second curve of a second radius R2. These radii must then be defined to enable the covering layer 24 to follow the outer surfaces of the groove, in particular avoiding excessive bending of the covering layer 24 to prevent cracking.

Note that if a covering layer 24 is used, the depth D and width W of groove 23 must be recalculated, e.g. the previously defined width W must be increased by twice the thickness of covering layer 24.

The presence of the groove 23 in the haptic device 10 also makes it easy for a user to identify haptic zones 10a, 10b. For example, groove 23 may be coated in a color different from that of the haptic zones, so that it can be highlighted.

In conclusion, the present invention describes a haptic device with a plurality of haptic zones separated by a groove. The various constructions described above make it possible to obtain a haptic device in which each haptic zone generates a haptic effect independently of the other haptic zones. The effectiveness of the haptic effect generated is also optimized by maximizing the transmission of the amplitude of a movement generated by a haptic actuator through a sheet element or haptic diffuser. In this way, the user is provided with a high-performance haptic device capable of generating a multitude of well-felt haptic effects on different parts of the user's body.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, elements, and/or components but do not preclude the presence or addition of one or more other features, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A haptic device (10) comprising a support (20) configured to support at least a part of a user's body (200) and a plurality of haptic units,
said haptic device (10) further comprising a first haptic zone (10a) and a second haptic zone (10b) each configured to receive respectively a first user's body part (200a) and a second user's body part (200b),
said first haptic zone (10a) comprising a first haptic unit (21) of said plurality and first part (20a) of said support (20) associated with said first haptic unit (21),
said second haptic zone (10b) comprising a second haptic unit (22) of said plurality and a second part (20b) of said support (20) associated with said second haptic unit (22), said second part (20b) being contiguous to said first part (20a),
said first haptic zone and said second haptic zone being arranged mechanically independent next to each other by a groove (23) made in said support (20).

2. The haptic device (10) according to claim 1, wherein said first haptic zone (10a) being configured to transmit a first haptic effect rendered by said first haptic unit (21) through a first front surface (S1) associated with said first haptic unit (21), said first front surface (S1) being configured to receive a first user's body part (200a) and
said second haptic zone (10b) being configured to transmit a second haptic effect rendered by said second haptic unit (22) through a second front surface (S2) associated with said second haptic unit (22), said second front surface (S2) being configured to receive a second user's body part (200b).

3. The haptic device (10) according to claim 2, wherein said first haptic unit (21) is configured to generate a translational movement along a first principal plane (P1) corresponding to a median plane of said first front surface (S1) and wherein said second haptic unit (22) is configured to generate a translational movement along a second principal plane (P2) corresponding to a median plane of said second front surface (S2).

4. The haptic device (10) according to claim 3, wherein said first principal plane (P1) and said second principal plane (P2) are arranged inclined relative to each other at a determined angle lower than 25 degrees.

5. The haptic device (10) according to one of claims 3 to 4, wherein said groove (23) has a width greater than a sum of a first maximum amplitude of movement of the first actuator (210) in said first plane (P1) and a second maximum amplitude of movement of the second actuator (220) in said second plane (P2).

6. The haptic device (10) according to one of claims 3 to 4, wherein said groove (23) has a depth determined from a first maximum amplitude of movement of the first actuator (210) in said first plane (P1), from a second maximum amplitude of movement of the second actuator (220) in said second plane (P2) and from a stiffness of a material of the support (20).

7. The haptic device (10) according to one of claims 1 to 6, wherein a profile of said groove (23) in a plane normal to a longitudinal direction of the groove has a continuous curvature.

8. The haptic device (10) according to claim 7, further comprising a covering layer (24) configured to be in contact and adhere with said user's body (200), said covering layer (24) covering said first and second haptic zones (10a, 10b) and said groove (23) by following a groove surface.

9. The haptic device (10) according to one of claims 1 to 8, wherein said first haptic unit (21) comprises a first haptic actuator (210) and a first sheet element (211), said first haptic actuator (210) being attached to a first face of said first sheet element (211) and said second haptic unit (22) comprises a second haptic actuator (220) and a second sheet element (221), said second haptic actuator (220) being attached to a second face of said second sheet element (221),
wherein said first sheet element (211) is linked to said first part (20a) on said first face and wherein said second sheet element (221) is linked to said second part (20b) on said second face.

10. The haptic device (10) according to claim 9, wherein said first haptic actuator (210) being arranged in a first opened cavity (20c) formed into said first part (20a), said first opened cavity (20c) having an opening oriented toward the outside of said haptic device (10), at least a part of said opening being closed with said first sheet element (211), and
wherein said second haptic actuator (220) being arranged in a second opened cavity (20d) formed into said second part (20b), said second opened cavity (20d) having an opening oriented toward the outside of said haptic device (10), at least a part of said opening being closed with said second sheet element (221).

11. The haptic device (10) according to one of claims 1 to 10, wherein said first and second user's body parts (200a, 200b) each refer to a back of a user.

12. The haptic device (10) according to one of claims 1 to 10, wherein said first and second user's body parts (200a, 200b) each refer to a leg of a user.

13. The haptic device (10) according to one of claims 1 to 12, wherein said first and second haptic units (21, 22) each comprise a vibrotactile actuator.

14. The haptic device (10) according to one of claims 1 to 13, wherein said first haptic unit (21) and second haptic unit (22) are controlled independently.

15. The haptic device (10) according to one of claims 1 to 14, wherein said haptic device (10) corresponds to a chair cover comprising a seat and a backrest, said seat and said backrest being attached to each other by a hinge.

16. The haptic device (10) according to claim 15, wherein said seat comprising a first set of haptic zones comprising said first and second haptic zones (10a, 10b), said groove (23) surrounding each haptic zone of the first set.

17. The haptic device (10) according to claim 15, wherein said backrest comprising a second set of haptic zones comprising said first and second haptic zones (1 0a, 10b), said groove (23) surrounding each haptic zone of the second set.

18. The haptic device (10) according to claims 16 and 17, wherein said first set comprising two haptic zones and said second set comprising four haptic zones.
